# EUROPEAN PATENT APPLICATION

(11) **EP 3 453 970 A2**
(43) Date of publication of application: **13.03.2019**
(21) Application number: 18192983.7
(22) Date of filing: 06.09.2018
(51) Int. Cl.: F23R 3/00, F23M 5/08, F28F 3/02

(54) **Float wall combustor panels having heat transfer augmentation**

(30) Priority: 06.09.2017 US 201715696265
(71) Applicant: United Technologies Corporation, Farmington, CT 06032 (US)
(72) Inventor: PORTER, Steven D., Wethersfield, CT Connecticut 06109 (US); AUXIER, James Tilsley, Bloomfield, CT Connecticut 06002 (US)
(74) Representative: Dehns

(57) **Abstract**

Combustor panels (126, 128) for use in gas turbine engines having a panel body (136) having a first side (138) and a second side (137), and a plurality of cooling pins (140) extending from the first side, the plurality of cooling pins arranged in a pin array pattern, wherein at least some of the cooling pins extend a first height (H₁) from the first side of the panel body, each cooling pin having a pin width, and is separated from adjacent cooling pins of the pin array by a pin array separation distance (S₀). The pin array separation distance is equal to or greater than the pin width.

## Description

### BACKGROUND

The subject matter disclosed herein generally relates to float wall combustor panels for gas turbine engines and, more particularly, heat flow augmentation features of float wall combustor panels.

A combustor of a gas turbine engine may be configured and required to burn fuel in a minimum volume (e.g., a combustion chamber). Such configurations may place substantial heat load on the structure of the combustor. The heat loads may dictate that special consideration is given to structures which may be configured as heat shields or panels configured to protect the walls of the combustor, with the heat shields being air cooled.

The combustor of a gas turbine engine mixes and ignites compressed air with fuel, generating hot combustion gases. These hot combustion gases are then directed by the combustor to the turbine section of the engine where power is extracted from the hot gases. The walls of a combustor are lined with the heat shields or panels (e.g., float wall panels) that protect the body of the combustor liner from damage due to exposure with the hot gases.

Each float wall panel has several structural protrusions to offset the float wall panel from the combustor wall, providing a channel of airflow for cooling. The cooling pins also provide increased surface area for heat transfer from the float wall panel to the cooling airflow channel. During engine service operation, the combustor has to withstand extremely high temperatures, oxidizing, corrosive and erosive conditions. Thus, improved cooling flow arrangements for float wall panels may be desirable.

### SUMMARY

According to some embodiments, combustor panels for use in gas turbine engines are provided. The combustor panels include a panel body having a first side and a second side and a plurality of cooling pins extending from the first side, the plurality of cooling pins arranged in a pin array pattern, wherein at least some of the cooling pins extend a first height (e.g., a first distance) from the first side of the panel body, each cooling pin having a pin width, and is separated from adjacent cooling pins of the pin array by a pin array separation distance. The pin array separation distance is equal to or greater than the pin width.

In addition to one or more of the features described above, or as an alternative, further embodiments of the combustor panels may include that each of the cooling pins extending the first height (e.g., first distance) have a rounded end.

In addition to one or more of the features described above, or as an alternative, further embodiments of the combustor panels may include that the plurality of cooling pins includes a plurality of second cooling pins extending a second height (e.g., second distance) from the first side of the panel body, wherein the first height (e.g., first distance) is greater than the second height (second distance).

In addition to one or more of the features described above, or as an alternative, further embodiments of the combustor panels may include that the second height (e.g., second distance) is about 50% of the first height (e.g., first distance).

In addition to one or more of the features described above, or as an alternative, further embodiments of the combustor panels may include that each second cooling pin has a flat end.

In addition to one or more of the features described above, or as an alternative, further embodiments of the combustor panels may include that the pin array separation distance is about 0.042 inches between adjacent pins of the plurality of cooling pins.

According to some embodiments, combustors for gas turbine engines are provided. The combustors include a combustor shell and at least one combustor panel mounted to the combustor shell. The at least one combustor panel includes a panel body having a first side and a second side and a plurality of cooling pins extending from the first side, the plurality of cooling pins arranged in a pin array pattern, wherein at least some of the cooling pins extend a first height (e.g., first distance) from the first side of the panel body, each cooling pin having a pin width, and is separated from adjacent cooling pins of the pin array by a pin array separation distance. The pin array separation distance is equal to or greater than the pin width.

In addition to one or more of the features described above, or as an alternative, further embodiments of the combustors may include that each of the cooling pins extending the first height (e.g., first distance) have a rounded end.

In addition to one or more of the features described above, or as an alternative, further embodiments of the combustors may include that the plurality of cooling pins includes a plurality of second cooling pins extending a second height (e.g., second distance) from the first side of the panel body, wherein the first height (e.g., first distance) is greater than the second height (second distance).

In addition to one or more of the features described above, or as an alternative, further embodiments of the combustors may include that the second height (e.g., second distance) is about 50% of the first height (e.g., first distance).

In addition to one or more of the features described above, or as an alternative, further embodiments of the combustors may include that each second cooling pin has a flat end.

In addition to one or more of the features described above, or as an alternative, further embodiments of the combustors may include that the pin array separation distance is about 0.042 inches between adjacent pins of the plurality of cooling pins.

In addition to one or more of the features described above, or as an alternative, further embodiments of the combustors may include that the at least one combustor panel is a float wall combustor panel.

In addition to one or more of the features described above, or as an alternative, further embodiments of the combustors may include that a cooling volume is defined between the panel body and the combustor shell, wherein a panel gap is a distance between the first side of the panel body and the combustor shell.

In addition to one or more of the features described above, or as an alternative, further embodiments of the combustors may include that the first height (e.g., first distance) is about 90% of the panel gap.

In addition to one or more of the features described above, or as an alternative, further embodiments of the combustors may include that the plurality of cooling pins includes a plurality of second cooling pins extending a second height (e.g., second distance) from the first side of the panel body, wherein the second height (second distance) is about 50% of the panel gap.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic cross-sectional illustration of a gas turbine engine that may employ various embodiments disclosed herein;
FIG. 1B is a schematic illustration of a combustor section of the gas turbine engine of FIG. 1A that may employ various embodiments disclosed herein;
FIG. 1C is a schematic illustration of a float wall panel of the combustor of the combustor section shown in FIG. 1B that may employ various embodiments disclosed herein;
FIG. 1D is a cross-sectional illustration of the float wall panel of FIG. 1C as mounted to a combustor shell and viewed along the line D-D;
FIG. 2A is a side elevation illustration of a combustor panel mounted to a combustor shell in accordance with an embodiment of the present disclosure;
FIG. 2B is a plan view illustration of the combustor panel of FIG. 2A illustrating a cooling pin array pattern;
FIG. 3 is a side cross-sectional illustration of a combustor panel in accordance with an embodiment of the present disclosure; and
FIG. 4 is an isometric illustration of a combustor panel in accordance with an embodiment of the present disclosure.

### DETAILED DESCRIPTION

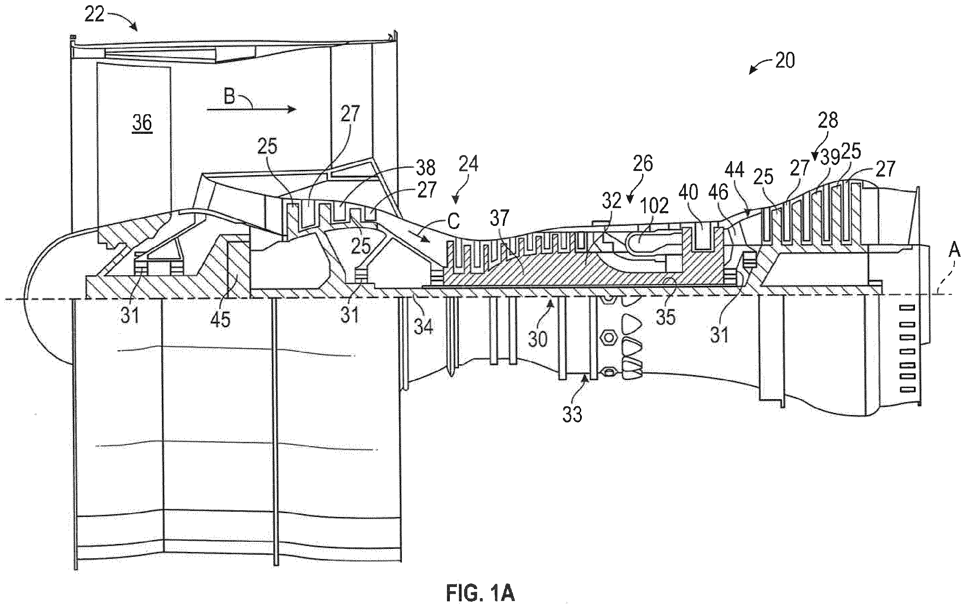

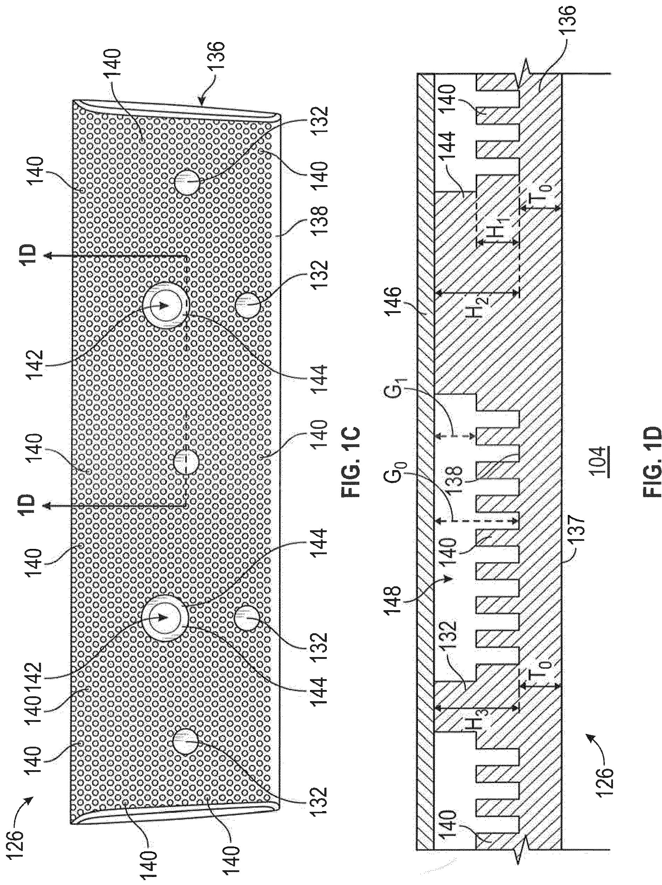

FIG. 1A schematically illustrates a gas turbine engine 20. The exemplary gas turbine engine 20 is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 102 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 102, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be the pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only examples of one embodiment of a geared architecture engine and that the present disclosure is applicable to other gas turbine engines, including direct drive turbofans.

In this embodiment of the example gas turbine engine 20, a significant amount of thrust is provided by the bypass flow path B due to the high bypass ratio. The fan section 22 of the gas turbine engine 20 is designed for a particular flight condition-typically cruise at about 0.8 Mach and about 35,000 feet (10668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R)/(518.7 °R)]^{0.5}, where T represents the ambient temperature in degrees Rankine. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

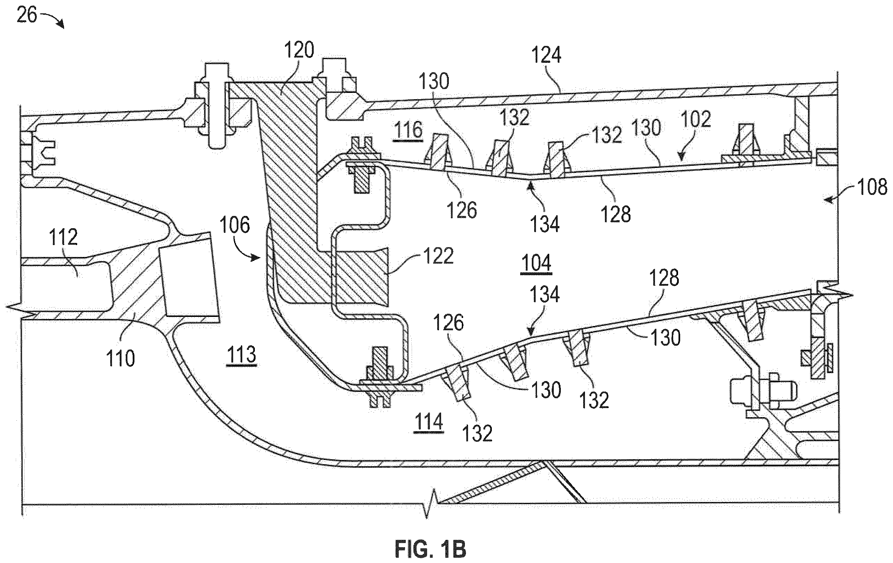

FIG. 1B is an enlarged schematic illustration of the combustion section 26 of the engine 20 that can employ embodiments of the present disclosure. As shown, the engine 20 includes a combustor 102 defining a combustion chamber 104. The combustor 102 includes an inlet 106 and an outlet 108 through which air may pass. The air is supplied to the combustor 102 by a pre-diffuser 110.

In the configuration shown in FIG. 1B, air may be supplied from a compressor into an exit guide vane 112, as will be appreciated by those of skill in the art. The exit guide vane 112 is configured to direct the airflow into the pre-diffuser 110, which then directs the airflow toward the combustor 102. The combustor 102 and the pre-diffuser 110 are separated by a shroud plenum, cavity, or chamber 113 that contains the combustor 102. The shroud chamber 113 includes an inner diameter branch 114 and an outer diameter branch 116. As air enters the shroud chamber 113, a portion of the air will flow into the combustor inlet 106, a portion will flow into the inner diameter branch 114, and a portion will flow into the outer diameter branch 116. The air from the inner diameter branch 114 and the outer diameter branch 116 will then enter the combustion chamber 104 by means of one or more nozzles, holes, apertures, etc. that are formed on the external surfaces of the combustor 102. The air will then exit the combustion chamber 104 through the combustor outlet 108. At the same time, fuel is supplied into the combustion chamber 104 from a fuel injector 1 20 and a nozzle 122. The fuel is ignited within the combustion chamber 104. The combustor 102 of the engine 20, as shown, is housed within a shroud case 124 which defines, in part, the shroud chamber 113.

The combustor 102, as will be appreciated by those of skill in the art, includes one or more combustor panels 126, 128 that are mounted on an interior surface of one or more combustor shells 130 and are configured parallel to the combustor shell 130 (whether at the inner or outer diameter). The combustor panels 126, 128 can be removably mounted to the combustor shell 130 by one or more attachment mechanisms 132. In some embodiments, the attachment mechanisms 132 can be integrally formed with a respective combustor panel 126, 128 and/or the combustor shell 130, although other configurations are possible. In some embodiments, the attachment mechanisms 132 are bolts or other structures that extend from the respective combustor panel 126, 128 through the interior surface thereof to a receiving portion or aperture of the combustor shell 130 such that the panel 126, 128 can be attached to the combustor shell 130 and held in place. Although shown and described as extending axially along the combustion chamber 104, those of skill in the art will appreciate that combustor panels may also be mounted and arranged as bulkhead panels (e.g., about the nozzle 122).

The combustor panels 126, 128 may include a plurality of cooling holes and/or apertures (e.g., dilution holes) to enable fluid, such as gases, to flow from areas external to the combustion chamber 104 into the combustion chamber 104. Cooling may be provided from the shell-side of the panels 126, 128 and hot gases may be in contact with the combustion-side of the panels 126, 128 during combustion within the combustion chamber 104. That is, hot gases may be in contact with a surface of the panels 126, 128 that is facing the combustion chamber 104. The combustor panels 126, 128 may be float wall panels, as will be appreciated by those of skill in the art.

First panels 126, as shown in FIG. 1B, are configured about the inlet 106 of the combustor 102 and may be referred to as forward panels. Second panels 128 may be positioned axially rearward and adjacent the first panels 126 and may be referred to as aft panels. The first panels 126 and the second panels 128 are configured with a gap 134 formed between axially adjacent first panels 126 and second panels 128. The gap 134 may be a circumferentially extending gap that extends about a circumference of the combustor 102. A plurality of first panels 126 and second panels 128 may be attached and extend about an inner diameter of the combustor 102, and a separate plurality of first and second panels 126, 128 may be attached and extend about an outer diameter of the combustor 102, as known in the art.

Combustor panels, such as shown in FIG. 1B, may require an even distribution of cooling pins located on a cold side of the combustor panels 126, 128. The combustor panels 126, 128 further require various other features, including, but not limited to bosses and attachment mechanisms, as described herein. The even distribution of cooling pins allows for even cooling of the combustor panels. As appreciated by those of skill in the art, the panels are typically curved to form an annular structure combustion chamber. Because of the curve of the panels, and the nature of the manufacturing process, forming both "normal" extending cooling pins and other extending features, such as bosses and attachment mechanisms, various issues may arise, whether related to producibility and/or operability and efficiency in use.

Turning now to FIG. 1C, an enlarged illustration of a combustor panel 126 is shown, viewing an under side or cold side of the combustor panel 126. The combustor panel 126 includes a panel body 136 having a hot side 137 (facing the combustion chamber 104, and shown in FIG. ID) and a cold side 138, shown in FIG. 1C. As used herein, the "cold side" of a combustor panel may be referred to as a first side and the "hot side" of the combustor panel may be referred to as a second side. As noted, the hot side of the panel faces a combustion chamber and is thus subject to high temperatures associated with combustion reactions. The cold side 138 is the opposite side of the panel from the hot side 137 and is arranged and/or formed to provide cooling and/or heat transfer or removal from the hot side (e.g., to reduce or regulate an operating temperature of the combustor panel).

The cold side 138 of the panel body 136 includes a plurality of cooling pins 140 extending outwardly therefrom (e.g., toward shroud chamber 113 when installed within the combustion section 26). In one non-limiting example, the panel body 136 of the combustor panel 126 can be made of cast nickel based super-alloys while the cooling pins 140 can be made of cast or wrought nickel based alloys. In other embodiments, the panel body 136 and the cooling pins 140 are formed in a single casting and formed from the same material. In a non-limiting example, the cooling pins 140 may be formed with a pin width (e.g., rounded pins having a pin diameter) between 0.020 inches (0.051 cm) and 0.060 inches (0.152 cm) and have a length of extension from the cold side 138 between 0.020 inches (0.051 cm) and 0.200 inches (0.508 cm).

The panel body 136 also includes a plurality of attachment mechanism 132 that extend outwardly from the cold side 138 of the panel body 136 for attachment of the combustor panel 126 to the combustor shell 130, as shown in FIG. 1B. Further, the panel body 136 includes dilution holes 142 that pass through the panel body 136 from the cold side 138 to the hot side 137. The dilution holes 142 enable air from the shroud chamber 113 to flow into the combustion chamber 104 to aid in the combustion of fuel that is injected into the combustion chamber 104 from the pilot nozzle 122 or other fuel injector. The dilution holes 142 are each defined, in part, by a dilution hole boss 144. The dilution hole boss 144 provides structural support to the panel body 136 at the location of the dilution holes 142.

FIG. ID is a cross-sectional view of the combustor panel 126 showing the hot side 137 and cold side 138 and variable heights of features of the cold side 138. As shown in FIGS. 1C-1D, the combustor panel 126 has an even distribution of cooling pins 140 located on the cold side 138 of the panel body 136. Stated another way, the cooling pins 140 extend from a first side of the combustor panel and are arranged to provide thermal transfer from the second (hot) side of the combustor panel. The cooling pins 140 are arranged in a pattern or array to enable consistent and/or uniform cooling to the combustor panel.

Also extending from the cold side 138 of the panel body 136 are the dilution hole bosses 144 and the attachment mechanisms 132 (referred to herein generically as "structural protrusions," which may encompass other structures extending from the cold side of a combustor panel). As shown in FIG. ID, the panel body 136 has a first thickness T₀ which is selected to minimize weight, provide shielding and containment for combustion processes, etc. as will be appreciated by those of skill in the art. The cooling pins 140 extend from the cold side 138 by a first height H₁. The first height H₁ is selected to optimize cooling that is provided to the panel body 136 while minimizing weight. Further, the distribution of the cooling pins 140 is arranged for optimized cooling (e.g., separation distance between adjacent cooling pins). The dilution hole bosses 144 and the attachment mechanisms 132 extend from the cold side 138 of the panel body 136 a second height H₂, and a third height H₃, respectively, with the second height H₂ and the third height H₃ being greater than the first height H₁. The increased thickness provided by the extension of the dilution hole bosses 144 and the attachment mechanisms 132 to the second height H₂ and the third height H₃ enables increased support and/or structure to the panel body 136 and/or enables engagement with the combustor shell 130 (shown in FIG. 1B).

Also shown in FIG. ID is the combustor shell 130 to which the combustor panel 126 is mounted. The mounting of the combustor panel 126 to the combustor shell 130 is through engagement using the attachment mechanisms 132. A panel gap G₀ exists between the cold side 138 of the panel body 136 and the combustor shell 146. Further, tips of the cooling pins 140 are separated from the combustor shell 130 by a pin gap G₁. The pin gap G₁ is typically about the height of the cooling pin 140 (e.g., G₁ = H₁; or G₁ = 50% G₀). A cooling volume 148 is formed between the combustor shell 130 and the combustor panel 126. Cooling air will impinge or flow into the cooling volume 148 from the shroud chamber 113 through holes or apertures within the combustor shell 130. The cooling air will impinge upon and flow between the cooling pins 140 to provide cooling to the combustor panel 126.

In the course of meeting the ever-increasing needs for efficiency and performance in gas turbine engines, both main gaspath and compressor bleed coolant temperatures tend to increase in step. As gaspath temperatures often exceed the incipient melting point (e.g., in the case of metallic alloys) of interfacing components, cooling air is utilized in various arrangements to maintain the temperatures of these components below the melting point. In one particular arrangement applied to float-wall combustor panels, such as those shown and described above, heat transfer enhancement features (e.g., cooling pins) are utilized on the "cold" side of the float-wall combustor panels. Coolant is forcefully impinged upon and convected through (e.g., by way of a pressure differential) the cooling pins in order to improve the heat transfer coefficient and cooling efficiency of the assembly for temperature maintenance. As described above, the heat transfer enhancement features are typically composed of cylindrical cooling pins or fins that occupy roughly one-half of the cavity height between the combustor panel and a combustor shell to which the combustor panel is mounted. The cooling pins are spaced at roughly one half their widths apart. Unfortunately, in environments where a significant amount of dirt is encountered by an aircraft engine (e.g., nearest the ground), a coating of dirt may be captured by these cooling pins and over time the dirt may accumulate, which can reduce an efficacy of the cooling, increase metal temperatures, and decrease a durability of the affected panel.

Accordingly, embodiments provided herein are directed to combustor panels that have features and structure that improve cooling efficacy and therefore decreased metal temperatures and increase durability. In some embodiments of the present disclosure, the cooling pin arrangement and cooling pin structure is modified from a typical arrangement to achieve improved life combustor panels.

Embodiments of the present disclosure increase the height of the cooling pin (and decreases the pin gap G₁) such that the cooling pins are taller/longer and nearer to the combustor shell. For example, in some embodiments, the typically 50%-height cooling pins may be increased to 90%-height cooling pins. Further, in some embodiments, the cooling pins may be spaced further apart compared to typical arrangements (e.g., an increase beyond half-width spacing). In one non-limiting example, the spacing may increase from about 0.015 inch spacing to about 0.042 inch spacing, with the distance measured edge-to-edge (e.g., an increase from ∼0.5 cooling pin width to ∼1 cooling pin width spacing). As used herein, a pin-width is dimension of the pin taken in a plane that is parallel to a cold side surface of a panel. Although shown and described with respect to rounded or circular cooling pins, those of skill in the art will appreciate that the cooling pins can take any geometric shape, including, but not limited to circular, ellipsoidal, triangular, square, trapezoidal, hexagonal, octagonal, star-shaped, etc. in a cross-sectional shape (e.g., in a plane that is parallel to a cold side surface of a panel) and function in a similar fashion to the specific embodiments described herein.

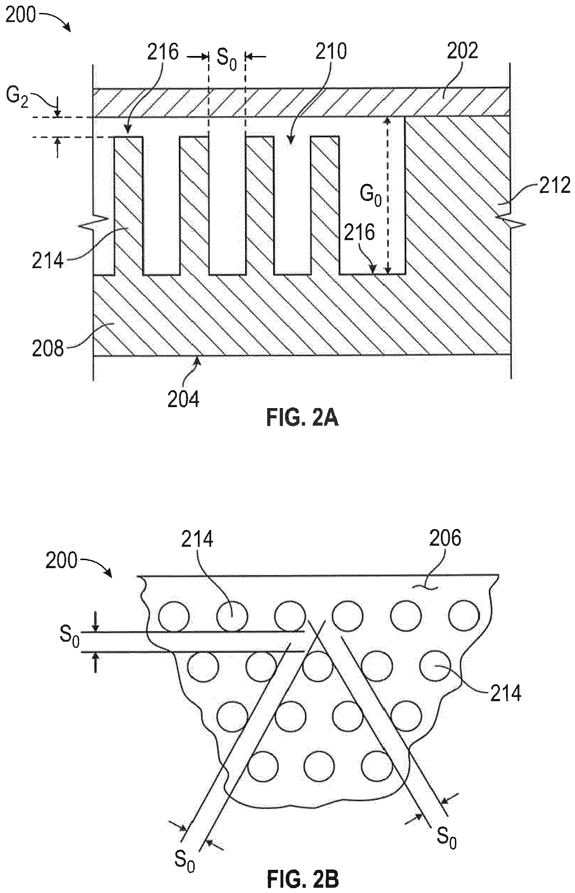

Turning now to FIGS. 2A-2B, schematic illustrations of a combustor panel 200 in accordance with an embodiment of the present disclosure are shown. FIG. 2A illustrates a side elevation view the combustor panel 200 mounted to a combustor shell 202 and FIG. 2B is a plan view illustration viewing a cold side of the combustor panel 200. In some embodiments, the combustor 200 represents a bulkhead combustor panel of a combustor. Similar to that shown above, the combustor panel 200 has a hot side 204 and a cold side 206 on opposing sides of a panel body 208. The cold side 206 of the panel body 208 is separated from the combustor shell 202 by a panel gap G₀ (similar to that described above). A cooling volume 210 is formed between the panel body 208 and the combustor shell 202. Extending from the cold side 206 of the panel body 208 are various structural protrusions 212 (e.g., attachment mechanisms, dilution hole bosses, etc.).

Also extending from the cold side 206 of the panel body 208 are a plurality of cooling pins 214. The cooling pins 214 of this embodiment are substantially taller or longer than the cooling pins of typical combustor panels. For example, as shown, a tip 216 of the cooling pins 214 is separated from the combustor shell 202 by a pin gap G₂ that is substantially smaller than the pin gap G₁ shown in FIG. ID. The increased height cooling pins 214 can provide for increased surface area that interacts with cooling air that is within the cooling volume 210. As such, improved cooling can be achieved through thermal conduction and extraction from the hot side 204 and transferred into the cooling air within the cooling volume 210.

The cooling pins 214 of this embodiment are arranged to have a pin gap G₂ that is equal to or greater than 70% of the panel gap G₀. In some embodiments, the pin gap G₂ may be equal to or greater than 90% of the panel gap G₀. Further, as shown in FIG. 2B, the cooling pins 214 are arranged in a pin array pattern with a pin array separation distance S₀. The pin array separation distance S₀ is a separation distance between exterior surfaces of adjacent cooling pins 214 within a pin array. In accordance with embodiments of the present disclosure, the pin array separation distance S₀ is larger than typically used. For example, in some embodiments, the pin array separation distance S₀ is equal to or greater than a width of one of the cooling pins 214.

Although shown in FIG. 2A with the cooling pins 214 having flat tops or flat surfaces at an end away from the panel body 208, such configuration is not limiting. That is, in some embodiments, the cooling pins may have other shaped or configured ends which may be selected to improve cooling flow through the cooling volume and/or to account for impinging air that may impinge upon the end of the cooling pin.

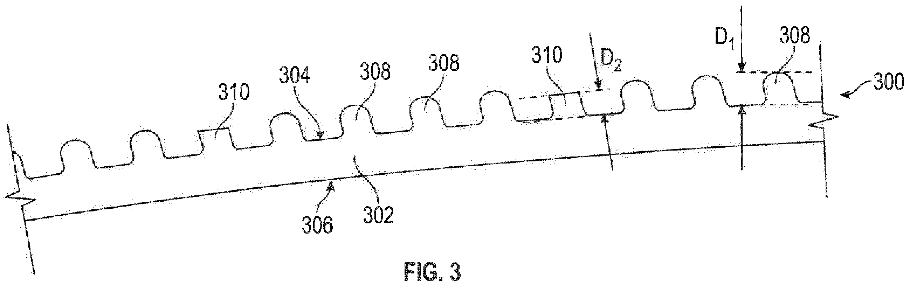

For example, turning now to FIG. 3, a combustor panel 300 is shown. The combustor panel 300 has a panel body 302 with a cold side 304 and opposing hot side 306. The combustor panel 300 further includes a plurality of first cooling pins 308 and second cooling pins 310. The first cooling pins 308 extend a first distance D₁ from the cold surface 304 and the second cooling pins 310 extend a second distance D₂ from the cold surface 304. As will be apparent to those of skill in the art, the first distance D₁ is greater than the second distance D₂. When the combustor panel 300 is installed to a combustor shell (e.g., as shown in FIG. ID) the first cooling pins 308 will extend about 70% to 95% of the distance from the cold surface 304 to the combustor shell. However, as noted, the second cooling pins 310 are shorter than the first cooling pins 308. In this embodiments, the second cooling pins 310 may be about half of the length of the first cooling pins 308 (e.g., D₂ = ∼0.5 x D₁). In one non-limiting example, the second cooling pins 310 extend about 50% of the distance from the cold surface 304 toward a combustor shell, when the combustor panel 300 is installed to the combustor shell.

The shorter, second cooling pins 310 may be located at intervals or predetermined positions or locations within a pin array pattern. The location of the second cooling pins 310 may be selected such that during a casting or manufacturing process, the use of molds may be employed and not interfered with due to the longer length first cooling pins 308. That is, because of the longer length of the first cooling pins 310, typical manufacturing techniques may not be possible. However, by including the shorter, second cooling pins 310 within the pin array pattern, typical molding and/or casting techniques may be employed.

Further, as shown in FIG. 3, the geometric shapes of the first and second cooling pins 308, 310 can vary. For example, as schematically shown, the first cooling pins 308 have rounded ends or tips and the second cooling pins 310 have flat ends or tips. Although shown with specific example geometries, other geometries for the ends or tips of the cooling pins may be used without departing from the scope of the present disclosure. For example, in some embodiments, the cooling pin tips/ends may be conical, spiraled, pyramid, squared, flat, stepped, etc. Further, the different size cooling pins may have differing tips depending on the function and/or desired cooling characteristics to be achieved. The first cooling pins 308 having rounded tips may be arranged to minimize interception of an impingement jet, i.e., deflection of cooling air impinging directly upon the tip of the cooling pin. The second cooling pins 310, may be positioned at a certain interval and shaped with a flat top, allowing use of an ejector feature in a wax die, which is a flat pin that presses upon the wax pattern from the die, as will be appreciated by those of skill in the art. The pattern of second cooling pins 310, within the pattern array of the first cooling pins 308, may be one out of every several cooling pins in an evenly distributed pattern.

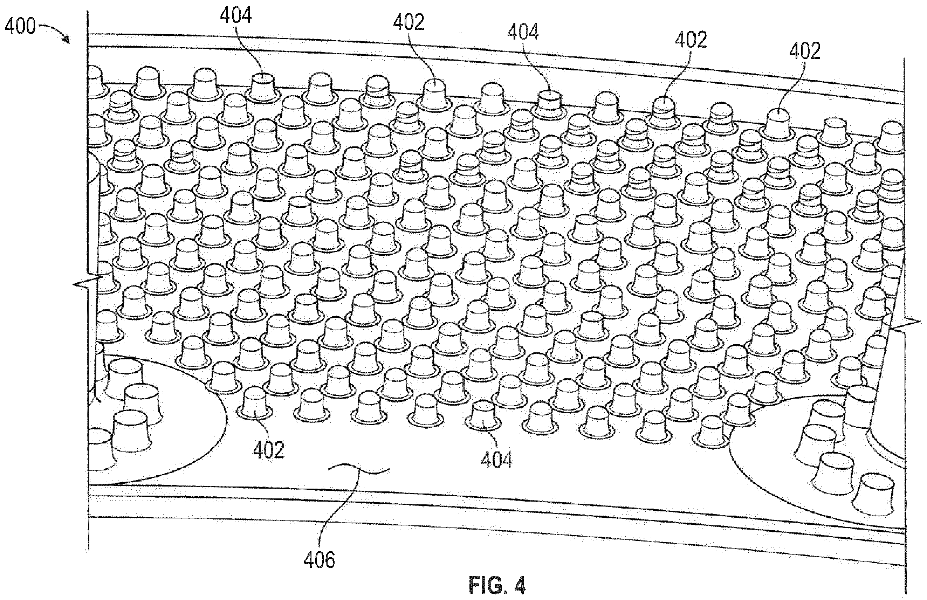

Turning now to FIG. 4, an isometric illustration of a combustor panel 400 in accordance with an embodiment of the present disclosure is shown. The combustor panel 400 includes a cooling pin array having a pattern of first cooling pins 402 and second cooling pins 404 extending from a cold side 406 of the combustor panel 400. The spacing between adjacent cooling pins 402, 404 is a uniform pin array separation distance, as described above, regardless of whether the cooling pin is a first cooling pin 402 or a second cooling pin 404.

In this embodiment, the first cooling pins 402 are relatively tall as compared to the second cooling pins 404. The first cooling pins 402 extend a first distance from the cold side 406 of the combustor panel 400 and the second cooling pins 404 extend a second distance from the cold side 406 of the combustor panel 400. The first distance is greater than the second distance. Further, as shown, the first cooling pins 402 have rounded tips and the second cooling pins have flat tips.

Advantageously, embodiments of the present disclosure provide for improved cooling characteristics of float-wall combustor panels. The increased height/length of the cooling pins of the present disclosure enable a reduced density of the pin array pattern. That is, because the cooling pins have more surface area (e.g., because they are taller), the cooling pins may be spaced further apart from each other, thus reducing the pin array density. Accordingly, advantageously, a combination of taller cooling pins and reduced density minimizes changes in wetted area from a typical full-dense, shorter pattern. Additionally, taller cooling pins with increased spacing tend to prevent coolant from "washing over" a fuller-density, shorter pattern of cooling pins, thus enhancing velocity through the cooling pins and in effect enhancing convective heat transfer. Moreover, increased fluid velocity nearest to the "cold" side of the combustor panel has been shown to reduce accumulation of dirt. For a dirty operator, even if the initial cooling effectiveness is reduced, over the long run with lower dirt accumulation part life will be increased. Furthermore, the use of ejectors (e.g., second cooling pins described above) will help break adhesion and reduce the risk of wax pattern deformation to improve overall casting producibility and quality over a pattern with no allowance for ejectors. Moreover, advantageously, half-height cooling pins can be spaced apart so as to minimize reduction of wetted area and associated heat transfer benefits.

The use of the terms "a," "an," "the," and similar references in the context of description (especially in the context of the following claims) are to be construed to cover both the singular and the plural, unless otherwise indicated herein or specifically contradicted by context. The modifier "about" and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," "radial," "axial," "circumferential," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A combustor panel (126, 128; 300) for use in a gas turbine engine comprising:
a panel body (136; 302) having a first side (138; 304) and a second side (137; 306); and
a plurality of cooling pins (140; 308, 310) extending from the first side, the plurality of cooling pins arranged in a pin array pattern, wherein at least some of the cooling pins extend a first height (H₁; D₁) from the first side of the panel body, each cooling pin having a pin width, and is separated from adjacent cooling pins of the pin array by a pin array separation distance (S₀);
wherein the pin array separation distance is equal to or greater than the pin width.

2. The combustor panel of claim 1, wherein each of the cooling pins (308) extending the first height have a rounded end.

3. The combustor panel of claim 1, wherein the plurality of cooling pins (308, 310) includes a plurality of second cooling pins (310) extending a second height (D₂) from the first side of the panel body, wherein the first height (D₁) is greater than the second height.

4. The combustor panel of claim 3, wherein the second height (D₂) is about 50% of the first height.

5. The combustor panel of claim 3 or 4, wherein each second cooling pin (310) has a flat end.

6. The combustor panel of any preceding claim, wherein the pin array separation (S₀) distance is about 0.042 inches (0.107 cm) between adjacent pins of the plurality of cooling pins (140; 308, 310).

7. A combustor (102) for a gas turbine engine, the combustor comprising:
a combustor shell (130); and
at least one combustor panel (126, 128; 130) as claimed in any preceding claim mounted to the combustor shell.

8. The combustor of claim 7, wherein the at least one combustor panel (126, 128; 300) is a float wall combustor panel.

9. The combustor of claim 7 or 8, wherein a cooling volume (148) is defined between the panel body (136) and the combustor shell (130), wherein a panel gap (G₀) is a distance between the first side (138; 304) of the panel body and the combustor shell.

10. The combustor of claim 9, wherein the first height (H₁) is about 90% of the panel gap (G₀).

11. The combustor of claim 9 or 10, wherein the plurality of cooling pins (308, 310) includes a plurality of second cooling pins (310) extending a second height (D₂) from the first side (304) of the panel body, wherein the second height is about 50% of the panel gap (G₀).
